# NEUE EUROPÄISCHE PATENTSCHRIFT

(11) **EP 2 038 124 B2**
(45) Veröffentlichungstag und Bekanntmachung des Hinweises auf die Entscheidung über den Einspruch: **02.08.2023**
(45) Hinweis auf die Patenterteilung: 09.03.2016
(21) Anmeldenummer: 07785814.0
(22) Anmeldetag: 13.06.2007
(51) Int. Cl.: B41M 3/00, B41M 3/14, G02B 3/00, G02B 5/20, G02B 27/60, B29D 11/00

(54) **VERFAHREN ZUM AUFBRINGEN EINER MIKROSTRUKTUR, WERKZEUGFORM UND GEGENSTAND MIT MIKROSTRUKTUR**
METHOD OF APPLYING A MICROSTRUCTURE, MOULD AND ARTICLE WITH A MICROSTRUCTURE
PROCÉDÉ POUR APPLIQUER UNE MICROSTRUCTURE, MOULE D'OUTIL ET OBJET DOTÉ D'UNE MICROSTRUCTURE

(30) Priorität: 27.06.2006 DE 102006029852
(43) Veröffentlichungstag der Anmeldung: 25.03.2009
(73) Patentinhaber: Giesecke+Devrient Currency Technology GmbH, 81677 München (DE)
(72) Erfinder: DICHTL, Marius, 81371 München (DE)
(74) Vertreter: Zeuner Summerer Stütz
(86) Internationale Anmeldenummer: PCT/EP2007/005200
(87) Internationale Veröffentlichungsnummer: WO 2008/000350

(56) Entgegenhaltungen:
- EP-A2- 0 816 112
- WO-A-94/27254
- WO-A-2005/106601
- WO-A1-96/17267
- US-A- 5 085 514
- US-A- 5 330 799
- US-A1- 2002 051 866
- US-A1- 2005 052 750

## Beschreibung

Die Erfindung betrifft ein Verfahren zum Aufbringen einer Mikrostruktur auf einen Träger, wie es insbesondere bei der Herstellung von Sicherheitselementen mit mikrooptischen Strukturen, insbesondere mikrooptischen Moire-Vergrößerungsanordnungen, zum Einsatz kommt. Die Erfindung betrifft ferner eine Werkzeugform zum Aufbringen einer derartigen Mikrostruktur sowie einen Gegenstand, insbesondere einen Datenträger oder ein Sicherheitselement, mit einer solchermaßen erzeugten Mikrostruktur.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens oder eines selbsttragenden Transferelements ausgebildet sein, das nach seiner Herstellung auf ein Wertdokument aufgebracht wird.

Eine besondere Rolle spielen dabei Sicherheitselemente mit optisch variablen Elementen, die dem Betrachter unter unterschiedlichen Betrachtungswinkeln einen unterschiedlichen Bildeindruck vermitteln, da diese selbst mit hochwertigen Farbkopiergeräten nicht reproduziert werden können. Die Sicherheitselemente können dazu mit Sicherheitsmerkmalen in Form beugungsoptisch wirksamer Mikro- oder Nanostrukturen ausgestattet werden, wie etwa mit konventionellen Prägehologrammen oder anderen hologrammähnlichen Beugungsstrukturen, wie sie beispielsweise in den Druckschriften EP 0 330 733 A1 oder EP 0 064 067 A1 beschrieben sind.

Es ist auch bekannt, Linsensysteme als Sicherheitsmerkmale einzusetzen. So ist beispielsweise in der Druckschrift EP 0 238 043 A2 ein Sicherheitsfaden aus einem transparenten Material beschrieben, auf dessen Oberfläche ein Raster aus mehreren parallel laufenden Zylinderlinsen eingeprägt ist. Die Dicke des Sicherheitsfadens ist dabei so gewählt, dass sie in etwa der Fokuslänge der Zylinderlinsen entspricht. Auf der gegenüberliegenden Oberfläche ist ein Druckbild registergenau aufgebracht, wobei das Druckbild unter Berücksichtigung der optischen Eigenschaften der Zylinderlinsen gestaltet ist. Aufgrund der fokussierenden Wirkung der Zylinderlinsen und der Lage des Druckbilds in der Fokusebene sind je nach Betrachtungswinkel unterschiedliche Teilbereiche des Druckbilds sichtbar. Durch entsprechende Gestaltung des Druckbilds können damit Informationen eingebracht werden, die jedoch lediglich unter bestimmten Blickwinkeln sichtbar sind. Durch entsprechende Ausgestaltung des Druckbilds können auch "bewegte" Bilder erzeugt werden. Das Motiv bewegt sich bei Drehung des Dokuments um eine zu den Zylinderlinsen parallel laufende Achse allerdings nur annähernd kontinuierlich von einem Ort auf dem Sicherheitsfaden zu einem anderen Ort.

Seit einiger Zeit werden auch mikrooptische Strukturen wie beispielsweise geblazte Gitterstrukturen, diffraktive Beugungsstrukturen, Hologramme, Mikrolinsenstrukturen, fresnellinsenartige Strukturen oder sogenannte Moiré-Vergrößerungsanordnungen als Sicherheitsmerkmale eingesetzt. Dabei bezeichnet Moire-Vergrößerung ein Phänomen, das bei der Betrachtung eines Rasters aus identisch wiederholten Bildobjekten durch ein Linsenraster mit annähernd demselben Rastermaß auftritt. Das dabei entstehende Moiremuster stellt eine Vergrößerung und Drehung der Bildobjekte des Bildrasters dar.

Werden die Raster aus Bildobjekten mittels herkömmlicher Drucktechnik erzeugt, so lassen sich Bildobjekte mit Strichstärken bis herab zu etwa 7 µm herstellen, so dass die Größen der gedruckten Bildobjekte, beispielsweise von Buchstaben oder Symbolen, bis herab zu etwa 70 µm betragen können. Aufgrund des Zusammenhangs zwischen Bildobjektgröße und Durchmesser und Brennweite der Linsen des für die Betrachtung notwendigen Linsenrasters beträgt die Gesamtdicke derart gefertigter Moire-Vergrößerungsanordnungen mindestens 110 µm, liegt also oberhalb der Dicke der üblicherweise abzusichernden Wertdokumente oder Banknoten.

Mit anderen Verfahren, beispielsweise mittels Prägetechnik, lassen sich auch dünnere Moire-Vergrößerungsanordnungen mit Mikrostrukturen als Bildobjekten herstellen. Technologiebedingt hat aber die geringere Strichstärke der geprägten Mikrostrukturen auch eine geringe Strukturtiefe zur Folge. Die resultierenden Unterschiede in der Lackschichtdicke reichen im Allgemeinen nicht aus, um stark kontrastierende Mikrostrukturen herzustellen. Das optische Erscheinungsbild solcher Moire-Vergrößerungsanordnungen genügt daher oft nicht den Anforderungen an ein eindruckvolles, leicht erkennbares Sicherheitselement. Darüber hinaus können mit keinem der bekannten Herstellungsverfahren Moire-Vergrößerungsanordnungen mit mehrfarbigen und somit visuell besonders ansprechenden und Aufmerksamkeit erregenden Mikrostrukturen erzeugt werden.

Davon ausgehend liegt der Erfindung die Aufgabe zugrunde, die Nachteile des Standes der Technik zu vermeiden und insbesondere ein verbessertes, bei der Herstellung mikrooptischer Strukturen, insbesondere mikrooptischer Moiré-Vergrößerungsanordnungen, einsetzbares Verfahren zum Aufbringen einer Mikrostruktur auf einen Träger anzugeben. Die Gesamtdicke der Anordnung soll bei geeigneter Aufbringung der Mikrostrukturen so gering sein können, dass sie als Sicherheitselement beispielsweise in Wertdokumente oder Banknoten eingebracht werden kann. Alternativ oder zusätzlich soll das optische Erscheinungsbild der Anordnungen verbessert werden und ein kontrastreicher und eindrucksvoller visueller Eindruck erzeugt werden. Diese Aufgabe wird durch das Verfahren mit den Merkmalen des Hauptanspruchs gelöst. Weiterbildungen der Erfindung sind Gegenstand der Unteransprüche.

Die Oberfläche der Werkzeugform kann die gewünschte Mikrostruktur positiv oder negativ darstellen, das heißt, die gewünschte Mikrostruktur, wie etwa eine Buchstaben- oder Symbolfolge, kann durch Vertiefungen in einer ansonsten erhabenen Oberfläche repräsentiert sein oder durch Erhebungen in einer ansonsten vertieften Oberfläche. Da beim Aufbringen auf den Träger nur aus den Vertiefungen farbiger bzw. farbloser Lack übertragen wird, führen die beiden Varianten zu einer positiven bzw. negativen Darstellung desselben Informationsgehalts.

Bevorzugt werden die Vertiefungen der Werkzeugform in Schritt b) mit einem strahlungshärtenden Lack befüllt und der Lack in Schritt e) durch Beaufschlagung mit Strahlung, insbesondere durch Beaufschlagung mit UV-Strahlung gehärtet. Die Strahlungsbeaufschlagung kann durch den Träger, bei einer UV-transparenten Werkzeugform aber auch durch die Werkzeugform hindurch erfolgen.

Der Lack in den Vertiefungen der Werkzeugform kann vor dem In-Kontakt-Bringen des Schritts d) vorgehärtet werden, um eine Durchmischung mit anderen Lackbeschichtungen, wie etwa einer auf den Träger aufgebrachten Stützschicht zu vermeiden.

Der Träger wird in Schritt c) dadurch vorbehandelt, dass eine härtbare Lackschicht als Stützschicht auf den Träger aufgebracht wird. Die Stützschicht wird dann in Schritt e) zusammen mit dem Lack in den Vertiefungen der Werkzeugform gehärtet.

Als Stützschicht wird mit besonderem Vorteil eine strahlungshärtende Lackschicht aufgebracht. Die strahlungshärtende Stützschicht kann dann in Schritt e) zusammen mit dem Lack in den Vertiefungen der Werkzeugform durch Beaufschlagung mit Strahlung, insbesondere mit UV-Strahlung, gehärtet, werden.

Zusätzlich zu oder anstelle des Lacks in den Vertiefungen kann auch die Stützschicht vordem In-Kontakt-Bringen des Schritts d) vorgehärtet werden.

Die Vorbehandlung des Trägers in Schritt c) kann zusätzlich durch eine Druckvorbehandlung erfolgen. Eine solche Druckvorbehandlung kann zusätzlich zum Aufbringen einer Stützschicht auf den Träger durchgeführt werden, da dann eine gute Verankerung der Stützschicht erreicht wird.

In Schritt b) wird zweckmäßig ein eventueller Überschuss an farbigem oder farblosem Lack mittels Rakel, Wischzylinder oder dergleichen entfernt.

Die Mikrostruktur der Werkzeugform wird bevorzugt durch Mikrostrukturelemente mit einer Strichstärke zwischen etwa 1 µm und etwa 10 µm und/ oder einer Strukturtiefe zwischen etwa 1 µm und etwa 10 µm gebildet. Dabei erlaubt das erfindungsgemäße Verfahren bei geringer Strichstärke die Übertragung von Lack hoher Schichtdicke, so dass sich insbesondere im Fall der Verwendung farbiger Lacke sehr kontrastreiche Mikrostrukturen erzeugen lassen.

Erfindungsgemäß wird die Mikrostruktur auf einen Träger aufgebracht, der eine transparente Kunststofffolie oder eine Papierschicht umfasst. Der Träger weist insbesondere eine Dicke zwischen etwa 5 µm und etwa 50 µm, vorzugsweise zwischen etwa 5 µm und etwa 25 µm auf.

Das erfindungsgemäße Verfahren kann mit besonderem Vorteil bei der Herstellung mikrooptischer Strukturen, insbesondere mikrooptischer Moire-Vergrößerungsanordnungen, eingesetzt werden. Es soll jedoch betont werden, dass die Erfindung nicht auf diese Anwendung beschränkt ist. Vielmehr können das beschriebene Verfahren und die Werkzeugform vorteilhaft auch bei der Herstellung anderer Sicherheitselemente genutzt werden, beispielsweise für die Erzeugung von Mikrotextdrucken auf Papier oder Folie.

Wird das oben beschriebene Verfahren zur Herstellung einer mikrooptischen Moiré-Vergrößerungsanordnung eingesetzt, so wird als Mikrostruktur vorzugsweise ein Motivbild aus einer planaren periodischen oder zumindest lokal periodischen Anordnung einer Mehrzahl von Mikromotivelementen aufgebracht. Die lateralen Abmessungen der Mikromotivelemente liegen dabei mit Vorteil zwischen etwa 5 µm und etwa 50 µm, vorzugsweise zwischen etwa 10 µm und etwa 35 µm. Zusätzlich wird die gegenüberliegende Seite des Trägers zweckmäßig mit einer planaren periodischen oder zumindest lokal periodischen Anordnung einer Mehrzahl von Mikrofokussierelementen zur Moiré-vergrößerten Betrachtung der Mikromotivelemente des Motivbilds versehen.

In einer bevorzugten Ausgestaltung des erfindungsgemäßen Verfahrens wird die Mikrostruktur mit Mikrostrukturelementen, insbesondere mit Mikromotivelementen mit zwei oder mehr unterschiedlichen Farben gebildet. Insbesondere können die Mikrostrukturelemente in Teilgruppen gebildet werden, die bei Betrachtung jeweils den Eindruck einer Mischfarbe erzeugen. Solche Teilgruppen können etwa durch jeweils drei Mikrostrukturelemente gleichartiger Form gebildet werden, die jeweils in einer Grundfarbe, beispielsweise Rot, Grün und Blau, aufgebracht sind. Aufgrund der Kleinheit der Mikrostrukturelemente sind die Einzelfarben für den Betrachter nicht auflösbar, er nimmt vielmehr eine Mischfarbe wahr, deren Farbton und Sättigung von den relativen Strichbreiten und Strukturtiefen der drei beteiligten Mikrostrukturelemente der Teilgruppen abhängt.

Die Färbung der Mikrostrukturelemente kann durch verschiedene lösliche und pigmenthaltige Farbstoffe hervorgerufen werden, wobei Farbstoffe bevorzugt sind, die bei geringen Strichstärken und Schichtdicken hohe Farbsättigungswerte und Kontraste erzeugen. Die Pigmentkorngröße von Pigmentfarben wird zweckmäßig auf die Strichstärken und Schichtdicken des zu übertragenden Lacks abgestimmt.

Im Allgemeinen ist die Stützschicht bei den entsprechenden Ausgestaltungen transparent ausgeführt, um den Farbeindruck der Mikrostrukturelemente nicht zu beeinträchtigen. Die Stützschicht kann jedoch auch gezielt eingefärbt sein, um besondere Färbungen oder Farbeffekte zu erzielen.

Der Träger mit der aufgebrachten Mikrostruktur kann neben den erwähnten Elementen mit einer oder mehreren Funktionsschichten für den Einsatz als Sicherheitselement für Sicherheitspapiere, Wertdokumente und dergleichen ausgestattet werden, wobei insbesondere Schichten mit visuell und/oder maschinell erfassbaren Sicherheitsmerkmalen, Schutz- oder Deckschichten, Klebeschichten, Heißsiegelausstattungen und dergleichen in Betracht kommen.

Zum Schutz vor Fälschungsangriffen und/ oder zur Erleichterung der Weiterverarbeitung wird die auf den Träger aufgebrachte Mikrostruktur mit Vorteil mit einer transparenten Überlackierung versehen.

In einer bevorzugten Ausgestaltung stellt das Sicherheitselement einen Sicherheitsfaden, eine Abdeckfolie für eine Banknote mit Loch, einen aufgebrachten Sicherheitsstreifen, ein Etikett oder ein selbsttragendes Transferelement zum Aufbringen auf einen Datenträger dar. Das Sicherheitselement kann dazu beispielsweise heißsiegelfähig ausgestattet sein. Die Gesamtdicke des Sicherheitselements liegt zweckmäßig zwischen etwa 20 µm und etwa 60 µm, vorzugsweise zwischen etwa 30 µm und etwa 50 µm.

Es ist ebenfalls bevorzugt, dass der Datenträger eine Banknote, ein Wertdokument, ein Pass, eine Ausweiskarte oder eine Urkunde ist.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig. 1: eine schematische Darstellung einer Banknote mit einem eingebetteten Sicherheitsfaden und einem aufgeklebten Transferelement,
- Fig. 2: schematisch den Schichtaufbau eines erfindungsgemäß hergestellten Sicherheitsfadens im Querschnitt,
- Fig. 3: eine schematische Darstellung des Aufbringens einer mikro-optischen Struktur, hier einer farbigen Mikrostruktur einer Moiré-Vergrößerungsanordnung auf einen vorbehandelten Träger mit einem Werkzeug,
- Fig. 4: eine erfindungsgemäß hergestellte Abdeckfolie mit einem einfarbigen Motivbild, wobei (a) eine stark schematisierte perspektivische Ansicht von schräg oben und (b) einen Querschnitt durch das Sicherheitselement zeigt,
- Fig. 5: ein erfindungsgemäß hergestelltes Sicherheitselement mit einem mehrfarbigen Motivbild, wobei (a) eine schematische Aufsicht und (b) einen Querschnitt durch das Sicherheitselement zeigt, und
- Fig. 6: eine Darstellung wie Fig. 5 für ein erfindungsgemäß hergestelltes Sicherheitselement mit einem Motivbild mit Mischfarben.

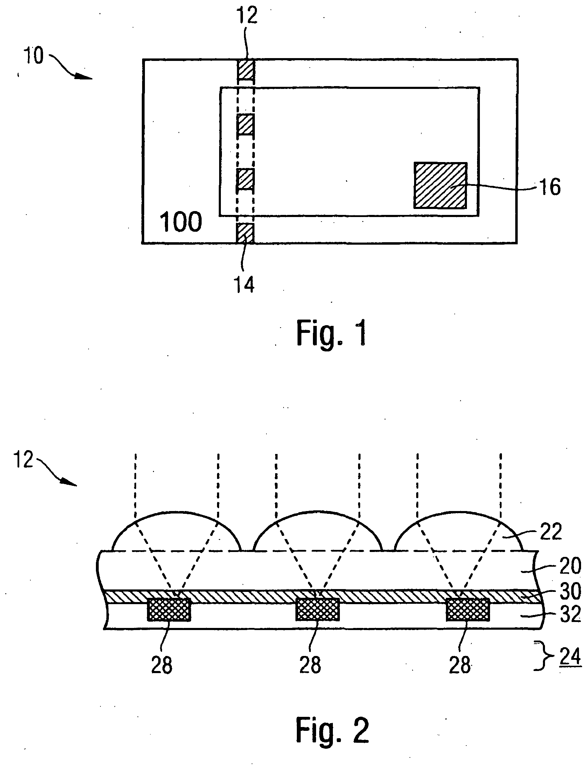

Die Erfindung wird nun am Beispiel eines Sicherheitselements für eine Banknote erläutert. Fig. 1 zeigt dazu eine schematische Darstellung einer Banknote 10, die mit zwei Sicherheitselementen 12 und 16 nach Ausführungsbeispielen der Erfindung versehen ist. Das erste Sicherheitselement stellt einen Sicherheitsfaden 12 dar, der an bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet. Das Sicherheitselement 16 kann auch in Form einer Abdeckfolie, eines Sicherheitsstreifens, eines Transferelements oder Etiketts ausgebildet sein, die über einem Fensterbereich oder einer durchgehenden Öffnung der Banknote angeordnet ist.

Sowohl der Sicherheitsfaden 12 als auch das Transferelement 16 können mikrooptische Strukturen, insbesondere eine Moiré-Vergrößerungsanordnung mit einer Mikrostruktur aus farbigen Mikromotivelementen nach einem Ausführungsbeispiel der Erfindung enthalten. Die Funktionsweise und das besondere Herstellungsverfahren für derartige Anordnungen werden im Folgenden anhand des Sicherheitsfadens 12 näher beschrieben.

Fig. 2 zeigt schematisch den Schichtaufbau des Sicherheitsfadens 12 im Querschnitt. Der Sicherheitsfaden 12 enthält einen Träger 20 in Form einer transparenten Kunststofffolie, im Ausführungsbeispiel einer etwa 20 µm dicken PET-Folie. Die Oberseite der Trägerfolie 20 ist mit einer rasterförmigen Anordnung von Mikrolinsen 22 versehen, die auf der Oberfläche der Trägerfolie ein zweidimensionales Bravais-Gitter mit einer vorgewählten Symmetrie bilden. Der einfacheren Darstellung halber wird nachfolgend von einer hexagonalen Gittersymmetrie ausgegangen, auch wenn das Bravais-Gitter nach der Erfindung eine niedrigere Symmetrie und damit eine allgemeinere Form aufweisen kann.

Der Abstand benachbarter Mikrolinsen 22 ist vorzugsweise so gering wie möglich gewählt, um eine möglichst hohe Flächendeckung und damit eine kontrastreiche Darstellung zu gewährleisten. Die sphärisch oder asphärisch ausgestalteten Mikrolinsen 22 weisen einen Durchmesser zwischen 5 µm und 50 µm, vorzugsweise lediglich zwischen 10 µm und 35 µm auf, und sind daher mit bloßem Auge nicht zu erkennen.

Auf der Unterseite der Trägerfolie 20 ist eine Motivschicht 24 angeordnet, die eine ebenfalls rasterförmige Anordnung von identischen Mikromotivelementen 28 enthält. Auch die Anordnung der Mikromotivelemente 28 bildet ein zweidimensionales Bravais-Gitter mit einer vorgewählten Symmetrie, wobei zur Illustration wieder eine hexagonale Gittersymmetrie angenommen wird.

Wie in Fig. 2 durch den Versatz der Mikromotivelemente 28 gegenüber den Mikrolinsen 22 angedeutet, unterscheidet sich das Bravais-Gitter der Mikromotivelemente 28 in seiner Symmetrie und/oder in der Größe seiner Gitterparameter geringfügig von dem Bravais-Gitter der Mikrolinsen 22, um den gewünschten Moiré-Vergrößerungseffekt zu erzeugen. Die Gitterperiode und der Durchmesser der Mikromotivelemente 28 liegen dabei in derselben Größenordnung wie die der Mikrolinsen 22, also im Bereich von 5 µm bis 50 µm, vorzugsweise von 10 µm bis 35 µm, so dass auch die Mikromotivelemente 28 mit bloßem Auge nicht zu erkennen sind.

Die optische Dicke der Trägerfolie 20 und die Brennweite der Mikrolinsen 22 sind so aufeinander abgestimmt, dass sich die Mikromotivelemente 28 etwa im Abstand der Linsenbrennweite befinden. Aufgrund der sich geringfügig unterscheidenden Gitterparameter sieht der Betrachter bei Betrachtung von oben durch die Mikrolinsen 22 hindurch jeweils einen etwas anderen Teilbereich der Mikromotivelemente 28, so dass die Vielzahl der Mikrolinsen 22 insgesamt ein vergrößertes Bild der Mikromotivelemente 28 erzeugt. Die sich ergebende Moiré-Vergrößerung hängt dabei von dem relativen Unterschied der Gitterparameter der verwendeten Bravais-Gitter ab. Unterscheiden sich beispielsweise die Gitterperioden zweier hexagonaler Gitter um 1%, so ergibt sich eine 100-fache Moiré-Vergrößerung. Für eine ausführlichere Darstellung der Funktionsweise und vorteilhafter Anordnungen der Mikromotivelemente und der Mikrolinsen wird auf die ebenfalls anhängige deutsche Patentanmeldung 10 2005 062 132.5 verwiesen, deren Offenbarungsgehalt insoweit in die vorliegende Anmeldung aufgenommen wird.

Bei derartigen Moire-Vergrößerungsanordnungen wird das erfindungsgemäße Verfahren mit Vorteil dazu eingesetzt, Motivbilder mit farbigen Mikromotivelementen zu schaffen und dabei die Gesamtdicke der Moire-Vergrößerungsanordnungen so gering zu halten, dass sie als Sicherheitselemente in Wertdokumente und Banknoten eingebracht werden können. Der Sicherheitsfaden 12 wird dazu beispielsweise mit einer Heißsiegelausstattung 32 versehen. Alternativ oder zusätzlich können mit dem erfindungsgemäßen Verfahren mehrfarbige Motivbilder erzeugt werden, die sogar Mischfarbendarstellungen, beispielsweise Darstellungen im RGB-System, ermöglichen.

Die Erzeugung des Mikrolinsenrasters auf der Trägerfolie 20 kann dabei in bekannter Weise mittels Prägung erfolgen, wobei sowohl thermoplastisch verformbare Lacke als auch UV-härtende Lacke zum Einsatz kommen können. Aufgrund der möglichen besseren Abformung ist gegenwärtig allerdings das strahlungshärtende Prägen UV-härtender Lacke bevorzugt. Als besonders zweckmäßig hat sich das Prägen UV-härtender Lacke im sogenannten Casting-Modus herausgestellt, bei dem ganz auf eine Vorhärtung des Lacks vor dem eigentlichen Prägevorgang verzichtet wird. Für eine möglichst gute Verankerung der geprägten Mikrolinsenanordnung bietet sich eine Druckvorbehandlung der Trägerfolie 20 an.

In weiteren für die Erfindung besonders bedeutsamen Verfahrensschritten wird eine Anordnung von Mikromotivelementen 28 voll- oder teilflächig auf die den Mikrolinsen 22 gegenüberliegende Seite der Trägerfolie 20 aufgebracht.

Dazu wird die Trägerfolie 20 in einem Vorbereitungsschritt vorbehandelt, beispielsweise indem eine Stützschicht 30 aus transparentem, UV-härtendem Lack auf die Trägerfolie 20 aufgebracht wird. Um die Verankerung der Stützschicht 30 auf der Trägerfolie 20 zu erhöhen, bietet sich die Verwendung einer speziell druckvorbehandelten Trägerfolie an. Dieser Vorbereitungsschritt kann vor oder auch nach dem Prägen der Mikrolinsenanordnung durchgeführt werden.

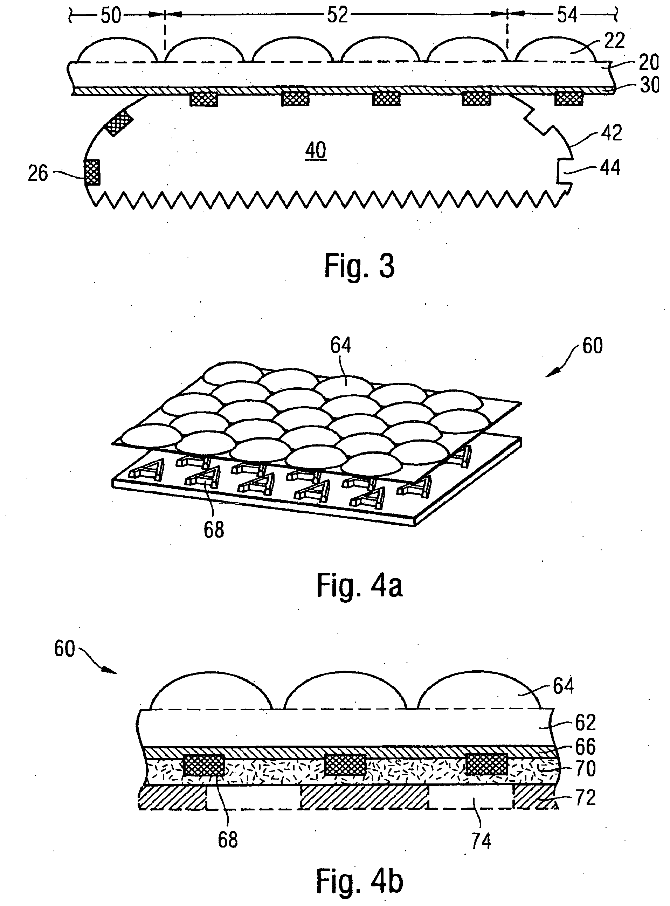

Mit Bezug auf Fig. 3 wird zum Aufbringen einer mikrooptischen Struktur, insbesondere der farbigen Mikrostruktur, ein Werkzeug 40 eingesetzt, dessen Oberfläche eine Anordnung von Erhebungen 42 und Vertiefungen 44 in Gestalt der gewünschten Mikrostruktur aufweist. Wie aus der nachfolgenden Darstellung deutlich wird, können die mikrooptischen Elemente, hier die Mikrostrukturelemente, sowohl als Vertiefungen als auch als Erhebungen in dem Werkzeug 40 ausgebildet sein. Für die dargestellte Herstellung farbiger Mikrostrukturelemente einer Moiré-Vergrößerungsanordnung erhält man im ersten Fall auf dem Träger farbige Mikrostrukturelemente in transparentem Umfeld, in letzterem Fall transparente Mikrostrukturelemente in farbigem Umfeld. Der Informationsgehalt der aufgebrachten Mikrostruktur ist in beiden Fällen gleich.

Die Vertiefungen 44 des Werkzeugs 40 werden zunächst mit einem UVhärtbaren farblosen oder farbigen Lack 26 befüllt und ein möglicher Lacküberschuss mittels Rakel-, Wischzylinder oder anderer geeigneter technischer Hilfsmittel entfernt.

Anschließend wird der befüllte Abschnitt des Werkzeugs 40 an die vorbehandelte Seite der Trägerfolie 20 herangeführt (Bereich 50) und in direkten Kontakt gebracht. Im Kontakt (Bereich 52) werden das Lackmaterial 26 in den Vertiefungen des Werkzeugs 40 und der zugehörige Abschnitt der Stützschicht 30 durch UV-Bestrahlung gehärtet, wobei durch die Polymerisation eine feste Verbindung zwischen dem farblosen und farbigen Lack 26 in den Vertiefungen und dem transparenten Lack der Stützschicht 30 entsteht.

Um eine Durchmischung der Lackanteile in den Vertiefungen des Werkzeugs 40 und der Stützschicht 30 im Kontakt vor der Aushärtung zu unterdrücken und damit das optische Erscheinungsbild der fertigen Anordnung zu verbessern, kann es zweckmäßig sein, eine leichte Vorhärtung des farbigen Lacks 26 im Werkzeug 40 und/ oder der Stützschicht 30 auf der Trägerfolie 20 vorzunehmen.

Zuletzt wird die Oberfläche des Werkzeugs 40 wieder von der Trägerfolie 20 entfernt (Bereich 54), wobei der nunmehr mit der Trägerfolie 20 über die Stützschicht 30 verbundene, gehärtete Lack 26 aus den Vertiefungen 44 der Werkzeugform gezogen wird. Da der Verbund aus gehärtetem Lack aus den Vertiefungen des Werkzeugs 40 und Stützschicht 30 mechanisch wie eine vollflächige Beschichtung wirkt, wird das Herausziehen der farblosen oder farbigen Lackanteile 26 aus dem Werkzeug 40 bei der Entformung positiv unterstützt.

Ein besonderer Vorteil der Härtung in der Werkzeugform im Bereich 52 liegt darin, dass hohe Schichtdicken farbloser und farbiger Lacke übertragen werden können, so dass sich bei Verwendung farbiger Lacke sehr kontrastreiche Darstellungen erzielen lassen. Zudem erlaubt das Verfahren die Herstellung feinster Mikrostrukturen mit höchster Auflösung, wie sie beispielsweise für Moire-Vergrößerungsanordnungen erwünscht sind, ohne dass die aufgebrachten Strukturen nach dem Entformen an Detailreichtum verlieren würden.

Um ein leichteres Entformen im Bereich 54 zu gewährleisten, kann die Oberfläche des Werkzeugs 40 mit einer Antihaftbeschichtung, beispielsweise einer CrN-Schicht versehen sein.

Aufgrund der starken mechanischen Beanspruchung der Oberfläche des Werkzeugs 40 durch das Abrakeln bzw. Abwischen bietet es sich an, die Oberfläche des Werkzeugs zu härten, um lange Einsatzzeiten zu gewährleisten. Eine solche Härtung kann beispielsweise durch eine Beschichtung der Werkzeugoberfläche mit metallischem Chrom, TiN oder sogenanntem DLC (diamond like carbon) erfolgen.

Das Werkzeug 40 kann in verschiedenen Varianten eingesetzt werden. In einer ersten Variante erfolgt die Herstellung des Werkzeugs 40 analog zu einem klassischen Prägesleeve. Die Fertigung des Werkzeugoriginals erfolgt dabei mit Methoden der Halbleitertechnologie, etwa mit Photolithographie, Elektronenstrahl-Lithographie, Laser-Direct-Writing oder Laserablation. Gegebenenfalls erfolgt eine geeignete Step-and-Repeat Rekombination mit dem Original.

Nach einer galvanischen Abformung, Zuschnitt und Schweißen können dann, falls für jeweilige Anwendung gewünscht, zusätzliche Antihaft-, Härtungs- oder andere Funktionsschichten aufgebracht werden. Das fertige Werkzeug kann dann auf einem Spannzylinder, wie einem klassischen Prägesleeve, verwendet werden.

Bei der zweiten Variante wird das Werkzeug 40 wie ein klassischer Druckzylinder hergestellt. Die Fertigung erfolgt dabei mit den bekannten Methoden der Druckzylinderfertigung, insbesondere mit Laserbelichtung, Ätzen oder Laserablation, wobei selbstverständlich die besonders hohen Anforderungen hinsichtlich Auflösungsvermögen und Positionierungstoleranzen berücksichtigt werden. Nach dem eventuellen Aufbringen zusätzlicher Antihaft-, Härtungs- oder anderer Funktionsschichten wird das fertige Werkzeug wie ein Druckzylinder verwendet.

Auch wenn der Einsatz des Werkzeugs 40 im Zusammenhang mit dem Aufbringen der Mikromotivelementanordnung näher beschrieben wurde, können selbstverständlich auch die Mikrolinse 22 einer Moire-Vergrößerungsanordnung oder andere mikrooptische Strukturen, beispielsweise geblazte Gitterstrukturen, DOEs bzw. CGHs, Mikrolinsenstrukturen, fresnellinsenartige Strukturen mithilfe eines derartigen Werkzeugs auf die Trägerfolie 20 aufgebracht werden.

Die Arbeitsschritte des Aufbringens der Mikrolinsenanordnung und der Mikromotivelemente können in beliebiger Reihenfolge vorgenommen werden. Auch eine gleichzeitige Durchführung, also das gleichzeitige Aufbringen der beiden Anordnungen auf gegenüberliegende Seiten der Trägerfolie, ist möglich.

Mikromotivelemente 28 mit unterschiedlichen Farben können in mehreren Arbeitsgängen mit mehreren Werkzeugen 40 erzeugt werden, die jeweils mit unterschiedlich gefärbtem Lack 26 befüllt sind. Die Mikromotivelemente müssen nicht alle in derselben Schicht vorliegen, es lassen sich auch Mehrschichtgestaltungen realisieren. Werden so mehrere Anordnungen von Mikromotivelementen in unterschiedlichen Farben erzeugt, müssen die verschiedenen Anordnungen im Allgemeinen nicht zueinander gepassert werden, da für den Moire-Effekt die relative Orientierung der Mikrolinsenanordnung und der jeweiligen Mikromotivelementanordnung entscheidend ist. Je nach Anwendungsfall kann allerdings auch eine genaue Passerung der Mikromotivelementanordnungen zueinander von Vorteil sein.

Fig. 4 zeigt ein erfindungsgemäß hergestelltes Sicherheitselement mit einem einfarbigen Motivbild, das in Gestalt eines Sicherheitsfadens oder, wie im Ausführungsbeispiel, in Gestalt einer Abdeckfolie 60 für eine Banknote mit Loch ausgebildet sein kann. Dabei zeigt Fig. 4(a) eine stark schematisierte perspektivische Ansicht von schräg oben, Fig. 4(b) einen Querschnitt durch das Sicherheitselement.

Die Abdeckfolie 60 weist als Träger eine transparente PET-Folie 62 einer Dicke von etwa 10 µm bis 30 µm auf. Auf eine erste Oberfläche der PET-Folie 62 ist mittels Prägung eines UV-härtenden Lacks eine periodische Anordnung von Mikrolinsen 64 aufgebracht. Die gegenüberliegende Oberfläche der Folie 62 wurde, wie oben beschrieben, zunächst mit einer Stützschicht 66 aus UV-härtendem Lack versehen und auf die so vorbehandelte Oberfläche dann ein Motivbild aus farbigen Mikromotivelementen 68 aufgebracht. In Fig. 4(a) sind die Mikromotivelemente 68 zur Illustration nur als einfache Buchstaben "A" dargestellt.

Die Anordnung der Mikromotivelemente 68 ist in eine transparente Überlackierung 70 eingebettet und so vor Fälschungsangriffen geschützt. Wird auf weitere opake Funktionsschichten verzichtet, entsteht bei Applikation der Abdeckfolie 60 im Register zum Banknotenpapier ein in Transmission beobachtbarer Moire-Vergrößerungseffekt in der fertigen Banknote.

Falls gewünscht, können zusätzliche Funktionsschichten aufgebracht werden, beispielsweise eine in Fig. 4(b) gestrichelt dargestellte metallische oder farbkippende Beschichtung 72, die Negativbildelemente in Form nicht beschichteter Teilbereiche 74 enthält. Durch die Überlackierung 70 können solche Beschichtungen mit Aussparungen gut mit einem Waschverfahren erzeugt werden, wie es beispielsweise aus der Druckschrift WO 99/13157 A1 bekannt ist, da die Überlackierung 70 die von den aufgebrachten Mikromotivelementen 68 stark erhöhte lokale Rauigkeit ausgleicht.

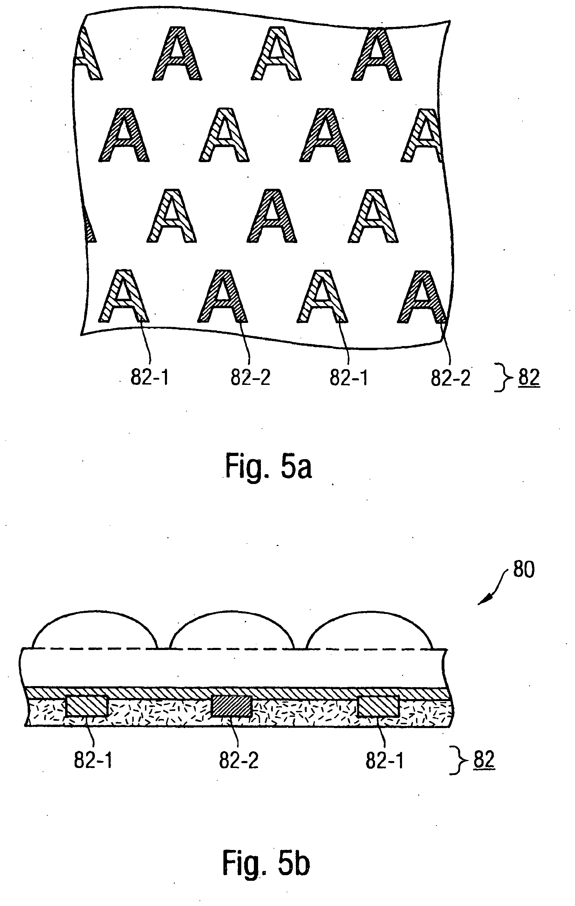

Das in Fig. 5 gezeigte Sicherheitselement 80 nach einem weiteren Ausführungsbeispiel der Erfindung weist ein mehrfarbiges Motivbild auf. Auch bei dem Sicherheitselement 80 kann es sich um einen Sicherheitsfaden oder eine Abdeckfolie für Banknoten handeln.

Die in Fig. 5(a) in Aufsicht dargestellte Anordnung der Mikromotivelemente 82 enthält verschiedenfarbige Mikromotivelemente 82-1 und 82-2, in der Figur wieder lediglich durch den Buchstaben "A" dargestellt. Die unterschiedlichen Farben lassen sich beispielsweise mithilfe von zwei Werkzeugen 40 erzeugen, die jeweils mit unterschiedlich gefärbtem Lack befüllt sind. Variationen der Strukturtiefe und der Strichbreite der Mikromotivelemente 82-1, 82-2 ermöglichen zahlreiche Variationen von Farbsättigung und Kontrast, so dass für den Designer ein weiter Gestaltungsspielraum besteht.

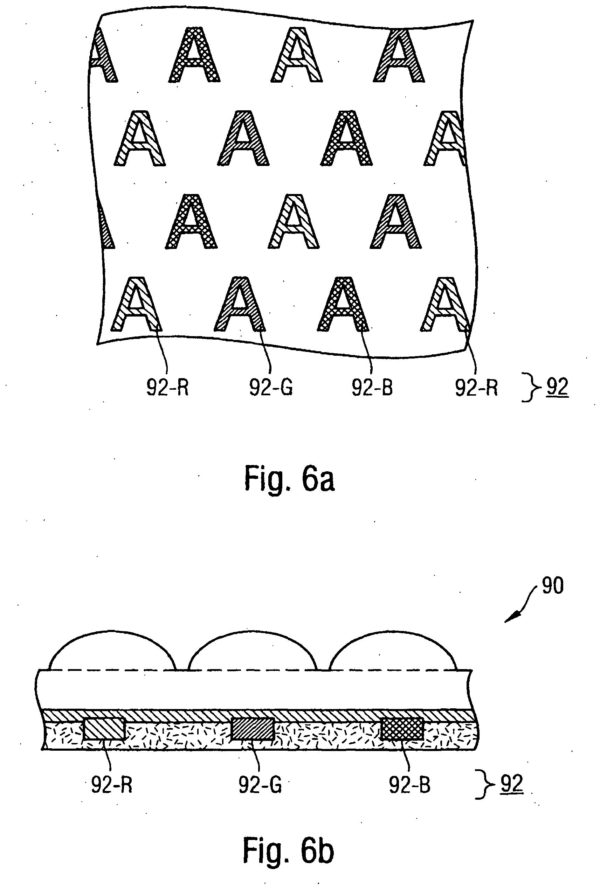

Fig. 6 zeigt eine weitere Gestaltung eines erfindungsgemäßen Sicherheitselements 90, das ein Motivbild mit Mischfarben aufweist. Im Ausführungsbeispiel sind benachbarte Mikromotivelemente 92-R, 92-G, 92-B jeweils mit rotem, grünem bzw. blauem Lack mit bestimmten Strukturtiefen und Strichbreiten aufgebracht. Aufgrund der kleinen Abmessungen der Mikromotivelemente 92 (beispielsweise etwa 35 µm) können die einzelnen Farben bei der Betrachtung nicht aufgelöst werden, der Betrachter nimmt vielmehr eine Mischfarbe wahr. Durch geeignete Wahl der Strukturtiefen und Strichbreiten der Mikromotivelemente 92-R, 92-G, 92-B kann dabei das gesamte Farbdreieck zwischen den verwendeten Grundfarben, beispielsweise Rot, Grün und Blau, erschlossen werden.

Die Ausgestaltung der Motivbilder mit Mischfarben ermöglicht auch neuartige Moire-Vergrößerungseffekte. Werden beispielsweise in unterschiedlichen Bereichen eines Sicherheitselements durch geeignete Werkzeuge unterschiedliche Mischfarben hergestellt, so können Moire-Vergrößerungsanordnungen mit Farbverläufen, Farbkippeffekten oder Farbkontrastvariationen hergestellt werden.

Beispielsweise kann ein Teilbereich eines Sicherheitselements nur mit roten Mikromotivelementen 92-R versehen sein, ein anderer Teilbereich nur mit grünen Mikromotivelementen 92-G. Zwischen den beiden Teilbereichen kann die Strukturtiefe der roten Mikromotivelemente 92-R von ihrem Maximalwert auf Null absinken, während gleichzeitig die Strukturtiefe der grünen Mikromotivelemente 92-G von Null auf ihren Maximalwert ansteigt, so dass zwischen den beiden Teilbereichen ein kontinuierlicher Farbverlauf von Rot nach Grün entsteht.

Es versteht sich, dass auch die Sicherheitselemente der Fig. 5 und 6 mit zusätzlichen Funktionsschichten versehen werden können, wie bereits in Zusammenhang mit Fig. 4 beschrieben.

## Patentansprüche

1. Verfahren zum Herstellen eines Datenträgers oder Sicherheitselements, bei dem auf einen Träger des Datenträgers oder Sicherheitselements, der eine transparente Kunststofffolie oder eine Papierschicht umfasst, eine farbige oder farblose Mikrostruktur aufgebracht wird indem
a) eine Werkzeugform bereitgestellt wird, deren Oberfläche eine Anordnung von Erhebungen und Vertiefungen in Gestalt der gewünschten Mikrostruktur aufweist, wobei die Mikrostruktur der Werkzeugform durch Mikrostrukturelemente mit einer Strukturtiefe zwischen etwa 1 µm und etwa 20 µm gebildet wird,
b) die Vertiefungen der Werkzeugform mit einem härtbaren farbigen oder farblosen Lack befüllt werden,
c) der Träger für eine gute Verankerung des farbigen oder farblosen Lacks vorbehandelt wird, indem eine härtbare Lackschicht als Stützschicht auf den Träger aufgebracht wird,
d) jeweils der befüllte Abschnitt der Werkzeugform an den vorbehandelten Träger herangeführt und mit dem Träger in Kontakt gebracht wird,
e) der in Kontakt mit dem Träger stehende Lack in den Vertiefungen der Werkzeugform gehärtet und dabei mit dem Träger verbunden wird, wobei die Stützschicht zusammen mit dem Lack in den Vertiefungen der Werkzeugform gehärtet wird, und
f) die Oberfläche der Werkzeugform wieder von dem Träger entfernt wird, so dass der mit dem Träger verbundene, gehärtete Lack aus den Vertiefungen der Werkzeugform gezogen wird und farbiger oder farbloser Lack nur aus den Vertiefungen der Werkzeugform auf den Träger übertragen wird.

2. Verfahren nach Anspruch 1, **dadurch gekennzeichnet, dass** die Vertiefungen der Werkzeugform in Schritt b) mit einem strahlungshärtenden Lack befüllt werden und der Lack in Schritt e) durch Beaufschlagung mit Strahlung, insbesondere mit UV-Strahlung gehärtet wird.

3. Verfahren nach Anspruch 1 oder 2, **dadurch gekennzeichnet, dass** der Lack in den Vertiefungen der Werkzeugform vor dem Inkontaktbringen des Schritts d) vorgehärtet wird.

4. Verfahren nach wenigstens einem der Ansprüche 1 bis 3, **dadurch gekennzeichnet, dass** eine strahlungshärtende Lackschicht als Stützschicht aufgebracht wird und die Stützschicht in Schritt e) zusammen mit dem Lack in den Vertiefungen der Werkzeugform durch Beaufschlagung mit Strahlung, insbesondere mit UV-Strahlung gehärtet wird.

5. Verfahren nach wenigstens einem der Ansprüche 1 bis 4, **dadurch gekennzeichnet, dass** die Stützschicht vor dem In-Kontakt-Bringen des Schritts d) vorgehärtet wird.

6. Verfahren nach wenigstens einem der Ansprüche 1 bis 5, **dadurch gekennzeichnet, dass** der Träger in Schritt c) durch eine Druckvorbehandlung zusätzlich zum Aufbringen einer Stützschicht auf den Träger vorbehandelt wird.

7. Verfahren nach wenigstens einem der Ansprüche 1 bis 6, **dadurch gekennzeichnet, dass** eventueller Überschuss an farbigem oder farblosem Lack in Schritt b) mittels Rakel, Wischzylinder oder dergleichen entfernt wird.

8. Verfahren nach wenigstens einem der Ansprüche 1 bis 7, **dadurch gekennzeichnet, dass** die Mikrostruktur der Werkzeugform durch Mikrostrukturelemente mit einer Strichstärke zwischen etwa 1 µm und etwa 10 µm gebildet wird, wobei bevorzugt die Mikrostruktur der Werkzeugform durch Mikrostrukturelemente mit einer Strukturtiefe zwischen etwa 1 µm und etwa 10 µm gebildet wird.

9. Verfahren nach wenigstens einem der Ansprüche 1 bis 8, **dadurch gekennzeichnet, dass** der Träger eine Dicke zwischen etwa 5 µm und etwa 50 µm, vorzugsweise zwischen etwa 5 µm und etwa 25 µm aufweist.

10. Verfahren nach wenigstens einem der Ansprüche 1 bis 9, **dadurch gekennzeichnet, dass** als Mikrostruktur ein Motivbild aus einer planaren periodischen oder zumindest lokal periodischen Anordnung einer Mehrzahl von Mikromotivelementen aufgebracht wird, wobei die lateralen Abmessungen der Mikromotivelemente bevorzugt zwischen etwa 5 µm und etwa 50 µm, vorzugsweise zwischen etwa 10 µm und etwa 35 µm liegen.

11. Verfahren nach Anspruch 10, **dadurch gekennzeichnet, dass** die gegenüberliegende Seite des Trägers mit einer planaren periodischen oder zumindest lokal periodischen Anordnung einer Mehrzahl von Mikrofokussierelementen zur Moire-vergrößerten Betrachtung der Mikromotivelemente des Motivbilds versehen wird.

12. Verfahren nach wenigstens einem der Ansprüche 1 bis 11, **dadurch gekennzeichnet, dass** die Mikrostruktur mit Mikrostrukturelementen, insbesondere mit Mikromotivelementen mit zwei oder mehr unterschiedlichen Farben gebildet wird, wobei die Mikrostrukturelemente besonders bevorzugt in Teilgruppen gebildet werden, die bei Betrachtung jeweils den Eindruck einer Mischfarbe erzeugen.

13. Verfahren nach wenigstens einem der Ansprüche 1 bis 12, **dadurch gekennzeichnet, dass** der Träger mit der aufgebrachten Mikrostruktur mit einer oder mehreren Funktionsschichten für den Einsatz als Sicherheitselement für Sicherheitspapiere, Wertdokumente und dergleichen ausgestattet wird, insbesondere mit Schichten mit visuell und/oder maschinell erfassbaren Sicherheitsmerkmalen.

## Claims

1. A method of manufacturing a data carrier or security element, wherein a colored or colorless micropattern is applied to a support of the data carrier or security element, the support comprising a transparent plastic foil or a paper layer, by
a) providing a die form whose surface exhibits an arrangement of elevations and depressions in the form of the desired micropattern, wherein the die form is formed by micropattern elements having a pattern depth between about 1 µm and about 20 µm,
b) filling the depressions in the die form with a curable colored or colorless lacquer,
c) pretreating the support for a good anchoring of the colored or colorless lacquer, in that a curable lacquer layer is applied to the support as a backing layer,
d) in each case, introducing the filled section of the die form to the pretreated support and bringing it into contact with the support,
e) the lacquer that is in contact with the support in the depressions in the die form being cured and, in the process, joined with the support, wherein the backing layer is cured together with the lacquer in the depressions in the die form, and
f) the surface of the die form being removed from the support again such that the cured lacquer that is joined with the support is pulled out of the depressions in the die form and colored or colorless lacquer is transferred only from the depressions of the die form to the support.

2. The method according to claim 1, **characterized in that** the depressions in the die form in step b) are filled with a radiation-curing lacquer and the lacquer cured in step e) by impingement with radiation, especially with UV radiation.

3. The method according to claim 1 or 2, **characterized in that** the lacquer in the depressions in the die form is precured prior to the bringing-into-contact in step d).

4. The method according to at least one of claims 1 to 3, **characterized in that** a radiation-curing lacquer layer is applied as the backing layer and, in step e), the backing layer is cured together with the lacquer in the depressions in the die form by impingement with radiation, especially with UV radiation.

5. The method according to at least one of claims 1 to 4, **characterized in that** the backing layer is precured prior to the bringing-into-contact in step d).

6. The method according to at least one of claims 1 to 5, **characterized in that** the support in step c) is pretreated through a pressure pretreatment in addition to applying a backing layer to the support.

7. The method according to at least one of claims 1 to 6, **characterized in that** any excess of colored or colorless lacquer in step b) is removed by means of a doctor blade, dampening cylinder or the like.

8. The method according to at least one of claims 1 to 7, **characterized in that** the micropattern in the die form is formed by micropattern elements having a line width between about 1 µm and about 10 µm, wherein preferably the micropattern in the die form is formed by micropattern elements having a pattern depth between about 1 µm and about 10 µm.

9. The method according to at least one of claims 1 to 9, **characterized in that** the support has a thickness between about 5 µm and about 50 µm, preferably between about 5 µm and about 25 µm.

10. The method according to at least one of claims 1 to 9, **characterized in that,** as the micropattern, a motif image composed of a planar periodic or at least locally periodic arrangement of a plurality of micromotif elements is applied, wherein the lateral dimensions of the micromotif elements preferably are between about 5 µm and about 50 µm, advantageously between about 10 µm and about 35 µm.

11. The method according to claim 10, **characterized in that** the opposing side of the support is provided with a planar periodic or at least locally periodic arrangement of a plurality of microfocusing elements for the moiremagnified viewing of the micromotif elements of the motif image.

12. The method according to at least one of claims 1 to 11, **characterized in that** the micropattern is formed having micropattern elements, especially having micromotif elements having two or more different colors, wherein the micropattern elements are particularly preferably formed in sub-groups that, when viewed, each produce the impression of a mixed color.

13. The method according to at least one of claims 1 to 12, **characterized in that** the support having the applied micropattern is furnished with one or more functional layers for use as a security element for security papers, value documents and the like, especially with layers having visually and/ or machine-perceptible security features.

## Revendications

1. Procédé de fabrication d'un support de données ou d'un élément de sécurité, dans lequel une microstructure colorée ou incolore est appliquée sur un support du support de données ou de l'élément de sécurité, qui comprend un film plastique transparent ou une couche de papier, en
a) mettre à disposition un moule d'outil, dont la surface présente un agencement de bosses et de creux sous la forme de la microstructure souhaitée, dans lequel la microstructure du moule d'outil étant formée par des éléments de microstructure avec une profondeur de structure comprise entre environ 1 um et environ 20 µm,
b) remplire les creux du moule d'outil avec un vernis durcissable coloré ou incolore,
c) pré-traiter le support pour un bon ancrage du vernis coloré ou incolore, en ce qu'une couche de vernis durcissable est appliquée en tant que couche de support sur le support,
d) rapprocher la partie respectivement remplie du moule d'outil du support pré-traité et la mettre en contact avec le support,
e) durcire le vernis qui est en contact avec le support dans les creux du moule d'outil étant durci et tout en le faire relié au support, la couche de support étant durcie ensemble avec le vernis dans les creux du moule d'outil, et
f) séparer de neauveau la surface du moule d'outil du support de telle sorte que le vernis durci relié au support soit tiré hors des creux du moule d'outil et que le vernis coloré ou incolore soit transféré sur le support uniquement à partir des creux du moule d'outil.

2. Procédé selon la revendication 1, **caractérisé en ce que**, à l'étape b), les creux du moule d'outil sont remplis avec un vernis durcissant par rayonnement et **en ce qu'**à l'étape e), le vernis est durci en le soumettant à un rayonnement, en particulier à un rayonnement UV.

3. Procédé selon la revendication 1 ou 2, **caractérisé en ce que** le vernis dans les creux du moule d'outil est pré-durci avant la mise en contact de l'étape d).

4. Procédé selon l'une au moins des revendications 2 à 3, **caractérisé en ce qu'**une couche de vernis durcissant par rayonnement est appliquée en tant que couche de support et **en ce qu'**à l'étape e), la couche de support est durcie, ensemble avec le vernis dans les creux du moule d'outil, par soumission à un rayonnement, en particulier un rayonnement UV.

5. Procédé selon l'une au moins des revendications 1 à 4, **caractérisé en ce que** la couche de support est prédurcie avant la mise en contact de l'étape d).

6. Procédé selon l'une au moins des revendications 1 à 5, **caractérisé en ce qu'**à l'étape c), le support est pré-traité grâce à un traitement préalable à l'impression, en plus de l'application d'une couche de support sur le support.

7. Procédé selon l'une au moins des revendications 1 à 6, **caractérisé en ce qu'**à l'étape b), un excédent éventuel de vernis coloré ou incolore est éliminé au moyen d'une raclette, d'un cylindre d'essuyage ou similaire.

8. Procédé selon l'une au moins des revendications 1 à 7, **caractérisé en ce que** la microstructure du moule d'outil est formée par des éléments de microstructure avec une épaisseur de trait comprise entre environ 1 µm et environ 10 µm, dans lequel la microstructure du moule d'outil est de préférence formée par des éléments de microstructure avec une profondeur de structure comprise entre environ 1 µm et environ 10 µm.

9. Procédé selon l'une au moins des revendications 1 à 8, **caractérisé en ce que** le support présente une épaisseur comprise entre environ 5 µm et environ 50 µm, de préférence entre environ 5 µm et environ 25 µm.

10. Procédé selon l'une au moins des revendications 1 à 9, **caractérisé en ce que**, en guise de microstructure, on applique un motif à base d'un agencement en plan, périodique ou au moins localement périodique, d'une pluralité d'éléments de micromotif, dans lequel les dimensions latérales de l'élément de micromotif se situent de préférence entre environ 5 µm et environ 50 µm, de préférence entre environ 10 µm et environ 35 µm.

11. Procédé selon la revendication 10, **caractérisé en ce que** le côté du support situé en vis-à-vis est doté d'un agencement en plan périodique ou au moins localement périodique d'une pluralité d'éléments de microfocalisation pour l'observation avec un grossissement à effet moiré des éléments de micromotif du motif.

12. Procédé selon l'une au moins des revendications 1 à 11, **caractérisé en ce que** la microstructure est formée par des éléments de microstructure, en particulier par des éléments de micromotif avec deux ou davantage de couleurs différentes, dans lequel les éléments de microstructure sont de manière particulièrement préférée formés en groupes partiels lesquels, lors de l'observation, produisent respectivement l'impression d'une couleur mélangée.

13. Procédé selon l'une au moins des revendications 1 à 12, **caractérisé en ce que** le support avec la microstructure appliquée est doté d'une ou plusieurs couches fonctionnelles pour l'utilisation en tant qu'élément de sécurité pour des papiers de sécurité, des documents de valeur et similaires, en particulier de couches avec des caractéristiques de sécurité détectables visuellement et/ou par machine.
